# FASCICULE DE BREVET EUROPEEN

(11) **EP 0 653 484 B1**
(45) Date de publication et mention de la délivrance du brevet: **20.03.2002**
(21) Numéro de dépôt: 94203097.4
(22) Date de dépôt: 25.10.1994
(51) Int. Cl.: C11D 7/50, B01D 12/00, C23G 5/028

(54) **Compositions comprenant du pentafluorobutane et utilisation de ces compositions**
Pentafluorobutan enthaltende Zusammensetzungen und deren Verwendung
Compositions containing pentafluorobutane and use thereof

(30) Priorité: 04.11.1993 BE 9301214
(43) Date de publication de la demande: 17.05.1995
(73) Titulaire: SOLVAY (Société Anonyme), 1050 Bruxelles (BE)
(72) Inventeur: Barthelemy, Pierre, B-1315 Pietrebais (BE); Paulus, Mireille, B-1020 Bruxelles (BE); Putteman, Robert, B-9370 Lebbeke (BE)
(74) Mandataire: Jacques, Philippe

(56) Documents cités:
- EP-A- 0 512 885
- JP-A- 5 171 190
- JP-A- 6 168 805
- US-A- 5 064 560
- PATENT ABSTRACTS OF JAPAN vol. 017, no. 571 (C-1121) 18 Octobre 1993 & JP-A-05 168 805 (ASAHI GLASS CO LTD) 2 Juillet 1993

## Description

L'invention concerne des compositions comprenant du pentafluorobutane et l'utilisation de ces compositions, notamment comme agent de nettoyage et/ou de séchage de surfaces solides.

Les hydrocarbures chlorofluorés complètement halogénés (CFC), en particulier le 1,1,2-trichloro-1,2,2-trifluoroéthane (CFC-113), sont largement utilisés comme solvants dans l'industrie pour le dégraissage et le nettoyage de surfaces diverses, particulièrement pour des pièces solides de forme compliquée et difficiles à nettoyer. Outre leur utilisation en électronique dans le nettoyage des flux de soudure pour éliminer le flux décapant qui adhère aux circuits imprimés, ils sont également classiquement utilisés pour dégraisser des pièces métalliques ou pour nettoyer des pièces mécaniques de haute qualité et de grande précision. Dans ces diverses applications, le CFC-113 est le plus souvent associé à d'autres solvants organiques, de préférence sous forme de compositions azéotropiques ou pseudo-azéotropiques ayant sensiblement la même composition dans la phase vapeur et dans la phase liquide, de sorte qu'elles peuvent être aisément employées au reflux.

Des compositions à base de CFC-113 sont aussi classiquement utilisées comme agent dessicatif, afin d'éliminer l'eau adsorbée à la surface de pièces solides.

Toutefois, le CFC-113, de même que d'autres chlorofluoroalcanes complètement halogénés, est aujourd'hui suspecté d'être impliqué dans la destruction de la couche d'ozone stratosphérique.

En conséquence, il y a actuellement un besoin urgent de trouver de nouvelles compositions, n'ayant pas d'influence néfaste sur la couche d'ozone.

A cette fin, un certain nombre de compositions azéotropiques à base d'hydrofluoroalcanes ont été récemment proposées. En particulier, la demande de brevet EP-A-0512885 (ELF ATOCHEM) propose une composition azéotropique comprenant en poids 93 à 99 % de 1,1,1,3,3-pentafluorobutane (HFA-365mfc) et de 7 à 1 % de méthanol. Les demandes de brevet JP 5/168805 et JP 5/171190 décrivent des compositions de nettoyage à base de HFA-365mfc et de trans-1, 2-dichloroéthylène dans des proportions pour lesquelles ils ne forment pas d' azéotrope.

Un des objectifs de la présente invention est de fournir d'autres compositions formant éventuellement des azéotropes ou des pseudo-azéotropes, qui soient particulièrement performantes lorsqu'elles sont utilisées comme agent de nettoyage dans des procédés de nettoyage par solvant. L'invention a encore pour objet de telles compositions possédant des propriétés particulièrement adaptées au nettoyage des cartes de circuits imprimés. Un autre objectif de l'invention est de fournir de telles compositions dépourvues d'effet destructeur vis-à-vis de la couche d'ozone, compositions dès lors utilisables en remplacement des solvants à base de chlorofluoroalcanes complètement halogénés.

La présente invention concerne dès lors des compositions comprenant du 1,1,1,3,3-pentafluorobutane et du 1,2-dichloroéthylène, telles que définies dans les revendications.

Le 1,2-dichloroéthylène existe sous deux formes isomériques, le cis-1,2-dichloroéthylène et le trans-1,2-dichloroéthylène. Aux fins de la présente invention, on entend par 1,2-dichloroéthylène indifféremment l'un ou l'autre isomère ou un mélange de ceux-ci. Néanmoins, le trans-1,2-dichloro-éthylène est l'isomère préféré.

Les teneurs en 1,1,1,3,3-pentafluorobutane et en 1,2-dichloroéthylène dans les compositions selon l'invention peuvent varier dans de larges mesures, selon l'utilisation envisagée.

Généralement, les compositions selon l'invention contiennent au moins 45 % en poids de 1,1,1,3,3-pentafluorobutane. Elles en contiennent avantageusement au moins 50 % en poids. De manière particulièrement préférée, elles en contiennent au moins 60 %. Elles peuvent en contenir jusqu'à 90 % en poids. Le plus souvent, elles en contiennent au plus 85 % en poids, de préférence au plus 80 % en poids.

Les compositions selon l'invention contiennent de 10 à 55 % en poids de 1,2-dichloroéthylène. De préférence, elles en contiennent de 15 à 50 %. De manière particulièrement préférée, elles en contiennent de 20 à 40 %.

Avantageusement, les compositions selon l'invention contiennent en outre un alcanol choisi parmi le méthanol, l'éthanol, le propanol et l'isopropanol. En règle générale, la quantité d'alcanol présent dans les compositions selon l'invention ne dépasse pas 15 % du poids de la composition. De préférence, elles en contiennent de 0,5 à 10 %.

Divers additifs peuvent éventuellement être présents dans les compositions selon l'invention. Les compositions selon l'invention peuvent ainsi contenir des stabilisants, des agents tensioactifs ou tous autres additifs permettant d'améliorer les performances des compositions selon l'invention lors de leur utilisation. La nature et la quantité de ces additifs sont fonction de l'utilisation envisagée et sont aisément définies par l'homme du métier. En règle générale, la quantité d'additifs présente dans les compositions selon l'invention ne dépasse pas environ 20 % du poids de la composition, le plus souvent pas plus de 10 %.

Les compositions selon l'invention contiennent le 1,1,1,3,3-pentafluorobutane et le 1,2-dichloroéthylène dans des proportions dans lesquelles ils forment un azéotrope ou un pseudo-azéotrope.

Des compositions selon l'invention particulièrement préférées sont celles qui contiennent le 1,1,1,3,3-pentafluorobutane, le 1,2-dichloroéthylène et un alcanol choisi parmi le méthanol et l'éthanol dans des proportions dans lesquelles ils forment un azéotrope ou un pseudo-azéotrope ternaire.

Fondamentalement, l'état thermodynamique d'un fluide est défini par quatre variables interdépendantes : la pression (P), la température (T), la composition de la phase liquide (X) et la composition de la phase gazeuse (Y). Un azéotrope est un système particulier à au moins deux composants pour lequel, à une température donnée et à une pression donnée, X est exactement égal à Y. Un pseudo-azéotrope est un système à au moins deux composants pour lequel, à une température donnée et à une pression donnée, X est substantiellement égal à Y. En pratique, cela signifie que les constituants de tels systèmes azéotropiques et pseudo-azéotropiques ne peuvent pas être séparés facilement par distillation et dès lors leur composition reste substantiellement constante dans les opérations de nettoyage par solvant, ainsi que dans les opérations de récupération de solvants usagés par distillation.

Aux fins de la présente invention, on entend, par pseudo-azéotrope, un mélange de deux ou plusieurs constituants dont le point d'ébullition (à une pression donnée) diffère du point d'ébullition de l'azéotrope de 0,2 °C au maximum.

Le 1,1,1,3,3-pentafluorobutane et le 1,2-dichloroéthylène forment un azéotrope ou un pseudo-azéotrope binaire lorsque leur mélange est constitué essentiellement de 56 % à 82 % en poids de 1,1,1,3,3-pentafluorobutane et de 44 à 18 % en poids de 1,2-dichloroéthylène. Une composition préférée formant un azéotrope ou un pseudo-azéotrope est constituée de 60 à 78 % en poids de 1,1,1,3,3-pentafluorobutane et de 40 à 22 % en poids de 1,2-dichloroéthylène. Sous une pression de 1022 mbar, la composition binaire constituée essentiellement d'environ 70 % en poids de 1,1,1,3,3-pentafluorobutane et d'environ 30 % en poids de 1,2-dichloroéthylène constitue un azéotrope dont le point d'ébullition est d'environ 36,3 °C. Cette composition est tout particulièrement avantageuse.

Le 1,1,1,3,3-pentafluorobutane, le 1,2-dichloroéthylène et le méthanol forment un azéotrope ou un pseudo-azéotrope ternaire lorsque leur mélange est constitué essentiellement de 62 à 68 % en poids de 1,1,1,3,3-pentafluorobutane, de 28 à 34 % en poids de 1,2-dichloroéthylène et de 2 à 7 % en poids de méthanol. A la pression atmosphérique, la composition ternaire constituée essentiellement d'environ 64,9 % en poids de 1,1,1,3,3-pentafluorobutane, d'environ 31,5 % en poids de 1,2-dichloroéthylène et d'environ 3,6 % en poids de méthanol constitue un azéotrope, dont le point d'ébullition est d'environ 32 °C. Cette composition est tout particulièrement avantageuse.

Le 1,1,1,3,3-pentafluorobutane, le 1,2-dichloroéthylène et l'éthanol forment un azéotrope ou un pseudo-azéotrope ternaire lorsque leur mélange est constitué essentiellement de 64 à 68 % en poids de 1,1,1,3,3-pentafluorobutane, de 30 à 35 % en poids de 1,2-dichloroéthylène et de 1 à 3 % en poids d'éthanol. A la pression atmosphérique, la composition ternaire constituée essentiellement d'environ 66,1 % en poids de 1,1,1,3,3-pentafluorobutane, d'environ 32,3 % en poids de 1,2-dichloroéthylène et d'environ 1,6 % en poids d'éthanol constitue un azéotrope, dont le point d'ébullition est d'environ 34 °C. Cette composition est tout particulièrement avantageuse.

Les compositions selon l'invention présentent un point d'ébullition adéquat pour remplacer les compositions à base de CFC-113 dans les appareillages de nettoyage existants. En ce qui concerne son impact sur l'environnement, le 1,1,1,3,3-pentafluorobutane apparaît particulièrement intéressant, puisqu'il présente un potentiel de destruction de l'ozone nul. Les compositions selon l'invention sont en outre inertes à l'encontre des différents types de surfaces à traiter, que celles-ci soient en métal, en plastique ou en verre.

Les compositions selon l'invention peuvent dès lors être utilisées dans les mêmes applications et selon les mêmes techniques que les compositions antérieures à base de CFC-113. En particulier, les compositions selon l'invention peuvent être utilisées comme agent de nettoyage, solvant, dégraissant, défluxant ou dessicatif. Les compositions ternaires contenant un alcanol apparaissent particulièrement intéressantes, en particulier celles où les constituants sont présents dans des proportions dans lesquelles ils forment un azéotrope ou pseudo-azéotrope.

L'invention concerne dès lors aussi l'utilisation des compositions selon l'invention comme agent de nettoyage, comme agent dégraissant de surfaces solides, comme agent de nettoyage de cartes de circuits imprimés, contaminées par un flux décapant et des résidus de ce flux ou comme agent dessicatif pour éliminer l'eau adsorbée à la surface d'objets solides.

Les exemples ci-après, non limitatifs, illustrent l'invention de manière plus détaillée.

### Exemple 1

Pour mettre en évidence l'existence de compositions azéotropiques ou pseudo-azéotropiques binaires entre le 1,1,1,3,3-pentafluorobutane et le 1,2-dichloroéthylène, on a utilisé un appareillage en verre constitué d'un flacon bouilleur de 50 ml surmonté d'un condenseur à reflux. La température du liquide est mesurée au moyen d'un thermomètre plongeant dans le flacon.

20,9 g de 1,1,1,3,3-pentafluorobutane pur ont été chauffés à ébullition sous une pression de 1022 mbar, puis de petites quantités de trans-1,2-dichloroéthylène, pesées avec précision, ont été progressivement introduites dans le flacon au moyen d'une seringue, via une tubulure latérale.

La détermination de la composition azéotropique a été réalisée par un relevé de l'évolution de la température d'ébullition du mélange en fonction de sa composition. La composition pour laquelle a été observé un point d'ébullition minimum est la composition azéotropique sous la pression de travail.

Le tableau ci-après rassemble les températures d'ébullition obtenues pour différentes compositions de 1,1,1,3,3-pentafluorobutane (PFBA) et de trans-1,2-dichloroéthylène (DCEe). On y observe que la meilleure estimation de la composition pour laquelle le point d'ébullition est minimum (36,3 °C) est d'environ 70 % en poids de 1,1,1,3,3-pentafluorobutane et 30 % en poids de trans-1,2-dichloroéthylène. Le point d'ébullition est de 36,5 °C ± 0,2 °C pour une composition contenant environ de 56 à 82 % en poids de 1,1,1,3,3-pentafluorobutane, sous une pression de 1022 mbar.

**TABLEAU I**

| PFBA, g | DCEe ajouté,g (qté cumulée) | Teneur en DCEe | | Point d'ébul., °C |
|---|---|---|---|---|
| | | % poids | % mol | |
| 20,9 | 0 | 0,00 | 0,00 | 40,8 |
| | 0,087 | 0,42 | 0,63 | 40,5 |
| | 0,211 | 1,00 | 1,52 | 40,3 |
| | 0,488 | 2,28 | 3,44 | 39,9 |
| | 0,826 | 3,80 | 5,69 | 39,4 |
| | 1,018 | 4,65 | 6,92 | 39,1 |
| | 1,302 | 5,86 | 8,69 | 38,8 |
| | 1,629 | 7,23 | 10,63 | 38,4 |
| | 1,891 | 8,30 | 12,14 | 38,1 |
| | 2,228 | 9,63 | 14,00 | 37,8 |
| | 2,627 | 11,16 | 16,10 | 37,7 |
| | 3,018 | 12,62 | 18,06 | 37,4 |
| | 3,570 | 14,59 | 20,69 | 37,1 |
| | 4,019 | 16,13 | 22,69 | 36,9 |
| | 4,577 | 17,90 | 24,98 | 36,7 |
| | 5,451 | 20,68 | 28,48 | 36,6 |
| | 5,939 | 22,13 | 30,26 | 36,5 |
| | 6,459 | 23,61 | 32,06 | 36,4 |
| | 7,331 | 25,97 | 34,88 | 36,4 |
| | 7,837 | 27,27 | 36,41 | 36,3 |
| | 9,120 | 30,38 | 39,98 | 36,3 |
| | 9,896 | 32,13 | 41,96 | 36,3 |
| | 10,578 | 33,60 | 43,59 | 36,4 |
| | 12,163 | 36,79 | 47,05 | 36,5 |
| | 13,899 | 39,94 | 50,38 | 36,5 |
| | 16,403 | 43,97 | 54,51 | 36,7 |
| | 20,529 | 49,55 | 59,99 | 37,1 |
| | 25,335 | 54,80 | 64,92 | 37,9 |
| | 28,117 | 57,36 | 67,26 | 38,2 |

### Exemple 2

On a préparé une solution contenant 66,2 % en poids de 1,1,1,3,3-pentafluorobutane, 29,8 % en poids de trans-1,2-dichloroéthylène et 4 % en poids de méthanol. Cette solution a été soumise à une distillation à pression atmosphérique à l'aide d'une colonne de Vigreux. La température d'ébullition est restée constamment égale à 32 °C. Différentes fractions du distillat, représentant chacune de 5 à 20 % du poids de la solution initiale ont été prélevées grâce à un répartiteur "pis-de-vache", puis analysées par chromatographie en phase gazeuse. Le tableau II rassemble les résultats obtenus.

**TABLEAU II**

| Fraction du distillat | PFBA (% poids) | DCEe (% poids) | Méthanol (% poids) |
|---|---|---|---|
| 1 (5,7 % poids de la solution) | 64,9 | 31,5 | 3,6 |
| 2 (12,1 % " ) | 65,1 | 31,2 | 3,7 |
| 3 (16,5 % " ) | 65,3 | 31,0 | 3,7 |
| 4 (15,0 % " ) | 65,6 | 30,7 | 3,7 |
| 5 (10,3 % " ) | 65,9 | 30,3 | 3,8 |
| 6 (14,0 % " ) | 66,2 | 30,0 | 3,8 |

La composition pratiquement identique des différentes fractions obtenues révèle l'existence d'un azéotrope ternaire entre le 1,1,1,3,3-pentafluorobutane, le trans-1,2-dichloroéthylène et le méthanol dont la composition estimée est de 64,9 % en poids de 1,1,1,3,3-pentafluorobutane, 31,5 % en poids de trans-1,2-dichloroéthylène et 3,6 % en poids de méthanol.

### Exemple 3

On a préparé une solution contenant 66,2 % en poids de 1,1,1,3,3-pentafluorobutane, 32,1 % en poids de trans-1,2-dichloroéthylène et 1,7 % en poids d'éthanol. Cette solution a été soumise à une distillation à pression atmosphérique à l'aide d'une colonne de Vigreux. La température d'ébullition est restée constamment égale à 34 °C. Différentes fractions du distillat, représentant chacune environ de 5 à 15 % du poids de la solution initiale ont été prélevées grâce à un répartiteur "pis-de-vache", puis analysées par chromatographie en phase gazeuse. Le tableau III rassemble les résultats obtenus.

**TABLEAU III**

| Fraction du distillat | PFBA (% poids) | DCEe (% poids) | Ethanol (% poids) |
|---|---|---|---|
| 1 (4,8 % poids de la solution) | 66,1 | 32,4 | 1,5 |
| 2 (16,7 % " ) | 66,1 | 32,3 | 1,6 |
| 3 (12,7 % " ) | 66,1 | 32,3 | 1,6 |
| 4 (12,2 % " ) | 66,3 | 32,1 | 1,6 |
| 5 (12,1 % " ) | 66,2 | 32,2 | 1,6 |
| 6 (15,1 % " ) | 66,2 | 32,2 | 1,6 |
| 7 (10,5 % " ) | 66,3 | 32,0 | 1,7 |

La composition pratiquement identique des différentes fractions obtenues révèle l'existence d'un azéotrope ternaire entre le 1,1,1,3,3-pentafluorobutane, le trans-1,2-dichloroéthylène et l'éthanol dont la composition estimée est de 66,1 % en poids de 1,1,1,3,3-pentafluorobutane, 32,3 % en poids de trans-1,2-dichloroéthylène et 1,6 % en poids d'éthanol.

## Revendications

1. Compositions comprenant
(a) au moins 45 % en poids de 1,1,1,3,3-pentafluorobutane;
(b) de 10 à 55 % en poids de 1,2-dichloroéthylène;
(c) éventuellement un alcanol choisi parmi le méthanol, l'éthanol, le propanol et l'isopropanol, en une quantité ne dépassant pas 15 % du poids de la composition; et
(d) éventuellement un additif en une quantité ne dépassant pas 20 % du poids de la composition,
le 1,1,1,3,3-pentafluorobutane et le 1,2-dichloroéthylène étant présents dans des proportions pour lesquelles ils forment un azéotrope ou un pseudo-azéotrope, ledit azéotrope ou pseudo-azéotrope étant constitué, à une pression de 1022 mbar, de 56% à 82% en poids de 1,1,1,3,3-pentafluorobutane et de 44 à 18% en poids de 1,2-dichloroéthylène.

2. Compositions selon la revendication 1, **caractérisées en ce qu'**elles sont constituées essentiellement de 1,1,1,3,3-pentafluorobutane et de 1,2-dichloroéthylène dans des proportions pour lesquelles ils forment un azéotrope ou un pseudo-azéotrope binaire.

3. Compositions selon la revendication 1, **caractérisées en ce qu'**elles contiennent l'alcanol en une quantité de 0,5 à 10 %.

4. Compositions constituées essentiellement
(a) de 1,1,1,3,3-pentafluorobutane, de 1,2-dichloroéthylène et de méthanol, dans des proportions pour lesquelles ils forment un azéotrope ou un pseudo-azéotrope ternaire, ledit azéotrope ou pseudo-azéotrope ternaire étant constitué de 62 à 68 % en poids de 1,1,1,3,3-pentafluorobutane, de 28 à 34 % en poids de 1,2-dichloroéthylène et de 2 à 7 % en poids de méthanol et,
(b) éventuellement d'un additif en une quantité ne dépassant pas 20 % du poids de la composition.

5. Compositions selon la revendication 4, **caractérisées en ce qu'**elles sont constituées essentiellement de 1,1,1,3,3-pentafluorobutane, de 1,2-dichloroéthylène et de méthanol.

6. Compositions constituées essentiellement
(a) de 1,1,1,3,3-pentafluorobutane, de 1,2-dichloroéthylène et d'éthanol, dans des proportions pour lesquelles ils forment un azéotrope ou un pseudo-azéotrope ternaire, ledit azéotrope ou pseudo-azéotrope ternaire étant constitué de 64 à 68 % en poids de 1,1,1,3,3-pentafluorobutane, de 30 à 35 % en poids de 1,2-dichloroéthylène et de 1 à 3 % en poids d'éthanol
(b) éventuellement d'un additif en une quantité ne dépassant pas 20 % du poids de la composition.

7. Compositions selon la revendication 6, **caractérisées en ce qu'**elles sont constituées essentiellement de 1,1,1,3,3-pentafluorobutane, de 1,2-dichloroéthylène et d'éthanol.

8. Utilisation des compositions selon l'une quelconque des revendications 1 à 7 comme agent de nettoyage.

9. Utilisation des compositions selon l'une quelconque des revendications 1 à 7 comme agent dégraissant de surfaces solides.

10. Utilisation des compositions selon l'une quelconque des revendications 1 à comme agent de nettoyage de cartes de circuits imprimés, contaminées par un flux décapant et des résidus de ce flux.

11. Utilisation des compositions selon l'une quelconque des revendications 1 à 7 comme agent dessicatif pour éliminer l'eau adsorbée à la surface d'objets solides.

## Claims

1. Compositions comprising
(a) at least 45 % by weight of 1,1,1,3,3-pentafluorobutane
(b) from 15 to 55 % by weight of 1,2-dichloroethylene
(c) optionally an alcanol chosen from methanol, ethanol, propanol and isopropanol in a quantity of not more than 15 % by weight of the composition
(d) optionally an additive in a quantity of not more than 20 % by weight of the composition,
the 1,1,1,3,3-pentafluorobutane and the 1,2-dichloroethylene being present in proportions for which they form an azeotrope or pseudoazeotrope, said azeotrope or pseudoazeotrope consisting at a pressure of 1022 mbar of from 56% to 82 %. by weight of 1,1,1,3,3-pentafluorobutane and of from 44 to 18 % by weight of 1,2-dichloroethylene.

2. Compositions according to Claim 1, **characterised in that** they consist essentially of 1,1,1,3,3-pentafluorobutane and 1,2-dichloroethylene in proportions for which they form a binary azeotrope or pseudoazeotrope.

3. Compositions according to Claim 1, **characterised in that** they contain the alcanol in a quantity of from 0.5 to 10 %.

4. Compositions consisting essentially of
(a) 1,1,1,3,3-pentafluorobutane, 1,2-dichloroethylene and methanol in proportions for which they form a ternary azeotrope or pseudoazeotrope said azeotrope consisting of from 62 to 68 % by weight of 1,1,1,3,3-pentafluorobutane, of from 28 to 34 % by weight of 1,2-dichloroethylene and of from 2 to 7 % by weight of methanol
(b) optionally an additive in a quantity of not more than 20 % by weight of the composition.

5. Compositions according to Claim 4, **characterised in that** they consist essentially of 1,1,1,3,3-pentafluorobutane, 1,2-dichloroethylene and methanol.

6. Compositions consisting essentially of
(a) 1,1,1,3,3-pentafluorobutane, 1,2-dichloroethylene and ethanol in proportions for which they form a ternary azeotrope or pseudoazeotrope said azeotrope consisting of from 64 to 68 % by weight of 1,1,1,3,3-pentafluorobutane, of from 30 to 35 % by weight of 1,2-dichloroethylene and of from 1 to 3 % by weight of ethanol
(b) optionally an additive in a quantity of not more than 20 % by weight of the composition.

7. Compositions according to Claim 4, **characterised in that** they consist essentially of 1,1,1,3,3-pentafluorobutane, 1,2-dichloroethylene and ethanol.

8. Use of the compositions according to anyone of claims 1 to 7 as a cleaning agent.

9. Use of the compositions according to anyone of claims 1 to 7 as a degreasing agent for solid surfaces.

10. Use of the compositions according to anyone of claims 1 to 7 as a cleaning agent for printed circuit boards contaminated by a pickling flux and residues from this flux.

11. Use of the compositions according to anyone of claims 1 to 7 as a desiccating agent for removing the water adsorbed at the surface of solid objects.

## Patentansprüche

1. Zusammensetzungen enthaltend
(a) mindestens 45 Gewichtsprozent 1,1,1,3,3-Pentafluorbutan
(b) von 10 bis 55 Gewichtsprozent 1,2-Dichlorethylen
(c) gegebenenfalls ein aus Methanol, Ethanol, Propanol und Isopropanol aus gewähltes Alkanol in einer nicht 15 % des Gewichts der Zusammensetzung übersteigenden Menge
(d) gegebenenfalls einen Zusatzstoff in einer nicht 20 % des Gewichts der Zusammensetzung übersteigenden Menge,
wobei 1,1,1,3,3-Pentafluorbutan und 1,2-Dichlorethylen in Verhältnissen gegenwärtig sind, für die sie ein Azeotrop oder ein Pseudoazeotrop bilden, welches genannte Azeotrop oder Pseudoazeotrop bei einem Druck von 1022 mbar aus von 56 bis 82 Gewichtsprozent 1,1,1,3,3-Pentafluorbutan und von 44 bis 18 Gewichtsprozent 1,2-Dichlorethylen besteht.

2. Zusammensetzungen gemäss Anspruch 1, **dadurch gekennzeichnet, dass** sie im wesentlichen aus 1,1,1,3,3-Pentafluorbutan und 1,2-Dichlorethylen in Verhältnissen, für die sie ein Azeotrop oder ein Pseudoazeotrop bilden, bestehen.

3. Zusammensetzungen gemäss Anspruch 1, **dadurch gekennzeichnet, dass** sie das Alkanol in einer Menge von 0.5 bis 10 % enthalten.

4. Zusammensetzungen im wesentlichen bestehend aus
(a) 1,1,1,3,3-Pentafluorbutan, 1,2-Dichlorethylen und Methanol in Verhältnissen, für die sie ein ternäres Azeotrop oder Pseudoazeotrop bilden, welches genannte Azeotrop oder Pseudoazeotrop aus von 62 bis 68 Gewichtsprozent 1,1,1,3,3-Pentafluorbutan, von 28 bis 34 Gewichtsprozent 1,2-Dichlorethylen und von 2 bis 7 Gewichtsprozent Methanol besteht
(b) gegebenenfalls einem Zusatzstoff in einer nicht 20 % des Gewichts der Zusammensetzung übersteigenden Menge.

5. Zusammensetzungen gemäss Anspruch 4, **dadurch gekennzeichnet, dass** sie im wesentlichen aus 1,1,1,3,3-Pentafluorbutan, 1,2-Dichlorethylen und Methanol, bestehen.

6. Zusammensetzungen im wesentlichen bestehend aus
(a) 1,1,1,3,3-Pentafluorbutan, 1,2-Dichlorethylen und Ethanol in Verhältnissen, für die sie ein ternäres Azeotrop oder Pseudoazeotrop bilden, welches genannte Azeotrop oder Pseudoazeotrop aus von 64 bis 68 Gewichtsprozent 1,1,1,3,3-Pentafluorbutan, von 30 bis 35 Gewichtsprozent 1,2-Dichlorethylen und von 1 bis 3 Gewichtsprozent Ethanol besteht
(b) gegebenenfalls einem Zusatzstoff in einer nicht 20 % des Gewichts der Zusammensetzung übersteigenden Menge.

7. Zusammensetzungen gemäss Anspruch 6, **dadurch gekennzeichnet, dass** sie im wesentlichen aus 1,1,1,3,3-Pentafluorbutan, 1,2-Dichlorethylen und Ethanol, bestehen.

8. Verwendung der Zusammensetzungen gemäss einem der Ansprüche 1 bis 6 als Reinigungsmittel.

9. Verwendung der Zusammensetzungen gemäss einem der Ansprüche 1 bis 6 als Entfettungsmittel von festen Oberflächen.

10. Verwendung der Zusammensetzungen gemäss einem der Ansprüche 1 bis 6 als Reinigungsmittel von mit einem Ätzfluss oder mit Resten dieses Flusses verunreinigten bedruckten Leiterplatte.

11. Verwendung der Zusammensetzungen gemäss einem der Ansprüche 1 bis 6 als Trocknungsmittel für die Entfernung von auf der Oberfläche von festen Körpern adsorbiertem Wasser.
